# EUROPEAN PATENT APPLICATION

(11) **EP 1 691 177 A1**
(43) Date of publication of application: **16.08.2006**
(21) Application number: 05447024.0
(22) Date of filing: 11.02.2005
(51) Int. Cl.: G01F 23/26, B41J 2/175, G01N 27/22

(54) **System for identifying an ink and detecting the level of said ink in a tank with capacitive sensors**

(71) Applicant: Mutoh Europe N.V., 8400 Oostende (BE)
(72) Inventor: Michiels, Christophe, 8400 Oostende (BE); Empain, Kenneth, 8450 Bredene (BE)
(74) Representative: Van Malderen, Joëlle

(57) **Abstract**

The present invention is related to a system for detecting a liquid level comprising a sub-tank arranged for being filled with a liquid and a first capacitive sensor (C2) . This first sensor is contactlessly positioned with respect to the liquid and arranged for indicating the range wherein the level of the liquid is to be kept. Said system further comprises a second capacitive sensor (C1) for indicating an empty state and for identifying said liquid. A third capacitive sensor (C3) is used as an overflow safety sensor. The present invention is also related to a printing system comprising a bulk ink tank from which ink is transported to a sub-tank comprising said level detecting system and print head to which ink is fed from said sub-tank.

## Description

### Field of the invention

The present invention relates to a system and method for detecting a liquid level in a sub-tank as e.g. used for feeding ink to printer devices.

### State of the art

In the prior art several patent documents can be found disclosing methods and devices to detect a remaining amount of ink by means of an optical sensor (see e.g. EP 1247648-A) or light directing elements (EP 0779156-B). They are limited to accurately detecting the remaining amount of ink.

### Aims of the invention

The present invention relates to a system and method for detecting a liquid level in a precise way, independent of the liquid composition and without physical contact with the liquid itself.

### Summary of the invention

The present invention relates to a system for detecting a liquid level comprising a sub-tank arranged for being filled with a liquid and a first capacitive sensor. The sensor is contactlessly positioned with respect to the liquid and arranged for indicating the range wherein the level of the liquid is to be kept.

In a preferred embodiment the system further comprises a second capacitive sensor being contactlessly positioned with respect to the liquid. This second capacitive sensor is arranged for indicating an empty state of the sub-tank. Advantageously the second sensor is further arranged for identifying the liquid, for example by means of a look-up table.

Advantageously the range wherein the level of the liquid is to be kept is set at a value between 1 and 15 mm wide and preferably between 1 and 10 mm wide. In a specific embodiment it is set to 2 mm.

In another embodiment the system further comprises a third capacitive sensor, also contactlessly positioned with respect to the liquid. This sensor is then used as a hard stop overflow safety sensor.

In another aspect the invention relates to a printing system comprising a system for detecting a liquid level as previously described and further comprising a bulk ink bottle from which liquid is transported to the sub-tank and a printer provided with a print head to which ink is fed from the sub-tank.

Advantageously the bulk ink bottle is connected to the sub-tank via a pump or valve. Preferably the sub-tank is further connected to a level controller.

### Short description of the drawings

Fig. 1 represents the overall set-up of a printing system comprising a liquid level detecting system according to the present invention.

Fig. 2 represents the sub-tank provided with capacitive sensors.

Fig. 3 represents in detail a capacitive sensor configuration.

### Detailed description of the invention

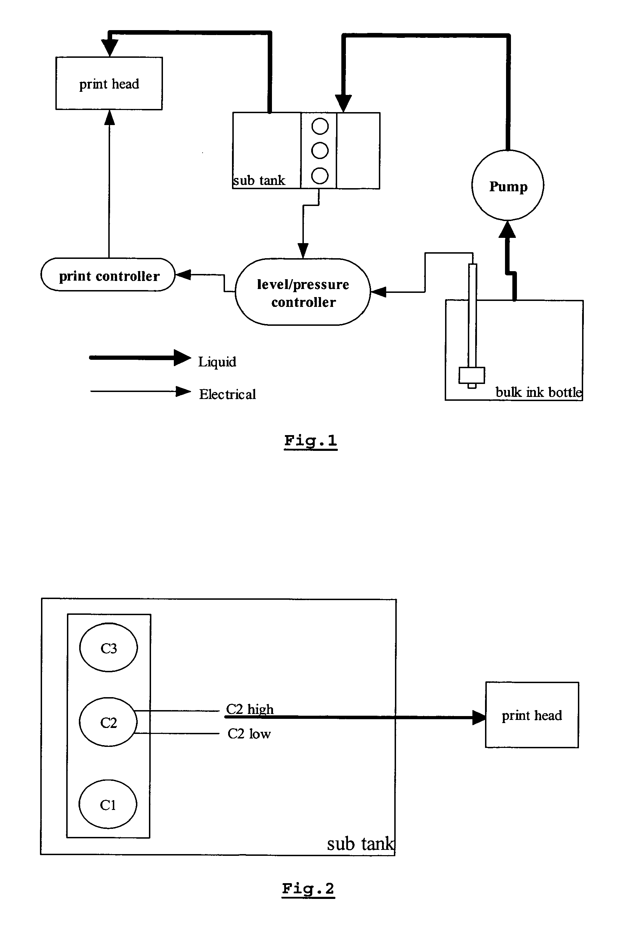

The present invention discloses a system for detecting a liquid level. Fig.1 shows a printing system comprising such a detection system. A print head is controlled via a print controller providing data on time and generating fire pulses. High power fire pulses are used to bring the ink out of the print heads. The print head needs to be supplied with ink, while keeping the pressure and flow rate under control. In this description the attention is mainly focused on the ink supply path.

Typically the ink is provided in big bulk bottles (from 1 to 5 or more liters). These bottles optionally contain an empty sensor, warning the operator when the ink bottle is almost empty. The operator has then some time left to pour new liquid in the bottles before the printer stops printing due to ink shortage.

Between bulk bottle and print head there is a sub-tank. The sub-tank is a reservoir, in which the pressure in or on the liquid is to be kept as steady as possible. There are two positions where the sub-tank can be located. It can be mounted along the print heads on a moving carriage, or it can be statically mounted, a certain distance away from the print heads.

The print heads have just below the opening through which the ink is output, a little reservoir. This reservoir is called the meniscus. The meniscus pressure in the print head needs to be a few cm negative pressure in order to prevent the ink from flowing out of the print heads spontaneously. This pressure is controlled through the sub-tank via an active pressure control system or via a hydrostatic control system. In both cases it is necessary to keep/hold the liquid level (pressure) as steady as possible in order to create as little influence on the print quality as possible. In the approach according to the invention this level is controlled by a capacitance level detector (main level sensor). The ink level in the sub-tank decreases in function of print speed and print data. Depending on the state of the main level sensor, ink is transported from the bulk ink bottles to the sub-tank. This is again done in order to hold the level (pressure) as steady as possible. When the bulk ink bottles are lower pressurised than the sub-tank, a pump is used, in the other case, a valve is used.

The transportation speed can be regulated depending on the state of the main level sensor. The smoother (in terms of pressure) the liquid is pumped in the sub-tank and the smoother the liquid leaves the sub-tank, the lesser influence there is on the print quality.

The level sensing device is a module, containing one, two or three separate level detectors (C1, C2, C3) (see Fig 2). The middle sensor C2 is the main level sensor. It senses the active controlled liquid level. C2 comprises two artificial levels, a low and high level, indicating the range between which the liquid is kept. The highest sensor C3 is a hard stop overflow safety sensor. Sensor C1, at the lowest position, fulfils two important roles. One is a hard stop empty sensor and the other is a liquid identification sensor.

When the level detector(s) indicate no liquid, the pump or valve should be activated and ink should flow into the sub-tank. Normally the liquid level should be gradually raised and this can be monitored on sensor C1. When the liquid reaches C2, the capacitance value read out by sensor C1, which then definitely is completely covered, is an indication for type of liquid, as each liquid has its own dielectric constant. In a specific embodiment the C1 values of various liquids are stored in a lookup table.

The pump or valve is stopped if the liquid level reaches the middle of C2. This is the working level that can be dynamically altered if necessary. In order to define the working value of C2 the capacitance value measured by C1 on the same sub-tank is put in the lookup table and the corresponding value C2 is obtained. Alternatively, a formula can be stored in the microprocessor that calculates the working value of C2 from the measured C1 value. This way of working allows keeping the liquid level constant despite different liquids. The sensor is able to distinguish between different liquids, due to their different dielectric constants. These can be put in a lookup table.

Under normal conditions, the print head consumes ink and so the liquid level in the sub-tank decreases slowly. The value of C2 will change accordingly. The system is so flexible that the working range can be set in the range determined by the capacitive sensor diameter, for example in the range from 1 to 15 mm and preferably in the range from 1 to 10 mm. The working range is advantageously set to 2 mm. Also the pumping speed can be adjusted. The speed of change of C2 is an indication of the speed the print head consumes ink, so advantageously ink is pumped in at a rate that approximates as closely as possible the ink consumption rate at the print head.

In case the bulk ink bottle gets empty, pumping new liquid to the sub-tank becomes impossible, so the working level can no longer be maintained. The user has a certain time to pour new liquid in the bulk bottles before the system is stopped. He is invited to do so, e.g. through a sound signal, which is triggered via bulk ink bottle empty sensors. The system is also stopped when the sensor C1 indicates no ink. If the lower level of C2 is reached and no new liquid is pumped in, the system can decide to stop the print job or let the print job to be continued-finished. That decision depends on the result of a calculation-estimation to check if the print could be finished with the remaining ink between sensor C2 and C1. Of course continuing printing under these circumstances, will not result in a consistent quality print.

When C2 is low, a pump is activated and new liquid is pumped in. The pump is stopped again, when the high level of C2 is reached. If for one reason or another, the ink supply is not stopped at the high level of C2 and continues to rise towards C3, the system should shut down (all pumps stopped) if the liquid really reaches C3. In other words, this is an absolute safety stop. C2 is also capable (to some extent) to detect the ink supply is not stopped at the high level of C2. Of course a liquid level exceeding the high level of C2, will again result in a non-consistent print quality! The pressure on the liquid corresponding with a liquid level around C3, should not result in leaking print heads due to a too small negative pressure. Therefore C3 must be well positioned, such that the pumping stops before the print heads start leaking.

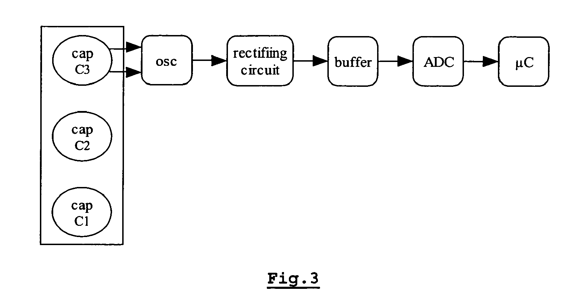

Fig.3 shows a scheme of the sensor configuration used. Basically the sensor is a PCB capacitor with a well defined shape and size. This capacitor is part of an oscillator circuit, followed by a rectifying circuit, buffer stage and analog to digital converted (ADC) to a microcontroller, which interprets the ADC values and accordingly controls the pump or valves. The frequency and amplitude of the oscillator circuit is function of the liquid and the liquid level. In Fig.3 only details for capacitive sensor C3 are provided. However, the same scheme holds for every capacitive sensor present in the system.

## Claims

1. System for detecting a liquid level comprising a sub-tank arranged for being filled with a liquid and a first capacitive sensor (C2), said sensor being contactlessly positioned with respect to said liquid and arranged for indicating the range wherein the level of said liquid is to be kept.

2. System as in claim 1, further comprising a second capacitive sensor (C1) being contactlessly positioned with respect to said liquid, said sensor (C1) being arranged for indicating an empty state of said sub-tank.

3. System as in claim 2, wherein said sensor (C1) is further arranged for identifying said liquid.

4. System as in claim 3, wherein sensor (C1) comprises a look-up table for identifying said liquid.

5. System as in any of claims 1 to 4, wherein said range is between 1 and 15 mm.

6. System as in any of claims 1 to 5, further comprising a third capacitive sensor (C3), said sensor (C3) being contactlessly positioned with respect to said liquid, said sensor (C3) being used as a hard stop overflow safety sensor.

7. Printing system comprising a system for detecting a liquid level as in any of claims 1 to 6 and further comprising a bulk ink bottle from which liquid is transported to said sub-tank and a printer provided with a print head to which ink is fed from said sub-tank.

8. Printing system as in claim 7, wherein said bulk ink bottle is connected to said sub-tank via a pump or valve.

9. Printing system as in claim 7 or 8, wherein said sub-tank is further connected to a level controller.
